# EUROPÄISCHE PATENTANMELDUNG

(11) **EP 3 486 031 A1**
(43) Veröffentlichungstag der Anmeldung: **22.05.2019**
(21) Anmeldenummer: 17202532.2
(22) Anmeldetag: 20.11.2017
(51) Int. Cl.: B23Q 11/00, A62B 35/04, E04G 21/24

(54) **ABSTURZSICHERUNGSVORRICHTUNG FÜR MASCHINEN UND LASTEN**

(71) Anmelder: Pro Automation GmbH, 51377 Leverkusen (DE); Atlas Copco Application Center Europe GmbH, 45141 Essen (DE)
(72) Erfinder: Thierjung, Volker, 51143 Köln (DE); Stöhr, Thomas, 42107 Wuppertal (DE)
(74) Vertreter: dompatent von Kreisler Selting Werner - Partnerschaft von Patent- und Rechtsanwälten mbB

(57) **Zusammenfassung**

Absturzsicherungsvorrichtung zur Absturzsicherung von Maschinen und Maschinenteilen bzw. Lasten im Allgemeinen mit einem Verbindungelement, wobei das Verbindungselement ein erstes Ende aufweist zur Verbindung mit einer Tragestruktur und dem ersten Ende gegenüberliegenden zweiten Ende zur Verbindung mit einer Maschine oder einem Maschinenteil oder einer Last. Dabei weist das Verbindungselement ein Dämpfungselement auf.

## Beschreibung

Die vorliegende Erfindung betrifft eine autarke, modulare Absturzsicherungsvorrichtung zur Absturzsicherung von Maschinen, Teile von Maschinen bzw. allgemeinen Lasten zur Vermeidung von Personen- und Maschinenschäden.

Die Absturzsicherungsvorrichtung wird zwischen einer Tragstruktur und der jeweiligen Maschine, Teil einer Maschine bzw. Last angeordnet.

Absturzsicherungsvorrichtungen verhindern im Falle eines Bruches des Tragmittels oder des Maschinenteils den Absturz der Maschine bzw. der Last und dadurch einen möglichen Personen und/oder Sachschaden. Die Lastsicherungsgeräte arbeiten unabhängig von der Aufhängung, an dem die zu sichernde Last hängt.

Bekannte Absturzsicherungsvorrichtungen sind Fangsysteme der Hersteller Skylotec, Söll, Honeywell, Miller, NTT Valley, etc., welche jedoch stets eine Mindestauslösegeschwindigkeit benötigen, die sich gemäß dem Gesetz der Energieerhaltung aus der Höhenänderung in die Geschwindigkeitsänderung umrechnen lässt. Aus diesem Zusammenhang ergibt sich eine erforderliche Mindestfallhöhe. Andernfalls wird die erforderliche Mindestauslösegeschwindigkeit der Fangsysteme nicht erreicht und ein Abfangen der herabstürzenden Last erfolgt nicht. Diese Mindestfallhöhe setzt voraus, dass der Absturz im freien Fall erfolgt, da andernfalls die Fallgeschwindigkeit nicht erreicht wird, um derartige Fangsysteme auszulösen. Kabel oder andere Strukturelemente der Maschine können jedoch den Fall bremsen, sodass die erforderliche Fallhöhe ansteigt, um die bekannten Fangsysteme auszulösen, oder unter Umständen nie erreicht werden kann. Die Maschine würde dann quasi ungebremst auf den Boden fallen und birgt damit ein erhebliches Unfallrisiko.

Nachteilig an den bekannten Fangsystemen ist weiterhin die relativ hohe Mindestfallhöhe , welche Anforderung an den Aufbau der Station stellen, die nicht in jedem Fall erfüllt werden können. So kann nicht für jede Maschine bzw. jedes Maschinenteil eine entsprechend ausreichende Fallhöhe mit zusätzlichen Sicherheitsmargen vorgesehen werden. Das Problem verschärft sich sofern die bekannten Fangsysteme in bereits existierende Maschinenanlagen nachgerüstet werden sollen.

Aufgabe der vorliegenden Erfindung ist es eine zuverlässige Absturzsicherungsvorrichtung zu schaffen.

Die Aufgabe wird gelöst durch eine Absturzsicherungsvorrichtung zur Absturzsicherung von Maschinen, Teile von Maschinen bzw. allgemeinen Lasten gemäß Anspruch 1.

Die erfindungsgemäße Absturzsicherungsvorrichtung zur Absturzsicherung von Maschinen, Teile von Maschinen bzw. allgemeinen Lasten weist ein Verbindungselement auf, wobei das Verbindungselement ein erstes Ende aufweist zur Verbindung mit einer Tragestruktur und ein zweites Ende, welches dem ersten Ende gegenüberliegt, zur Verbindung mit einer Maschine, einem Maschinenteil oder einer Last. Bei den Maschinen bzw. Maschinenteilen oder Lasten kann es sich um jegliche Maschine oder Last handeln, die in einer gewissen Höhe angebracht ist. Bei der Tragestruktur mit der das erste Ende des Verbindungselements verbunden ist, handelt es sich beispielsweise um einen Stahlbau, eine Decke oder ein Schienensystem. Insbesondere ist die Tragestruktur fest und geeignet, Fangstöße einer vorher definierten Größe auszuhalten. Insbesondere ist die Tragestruktur ebenfalls dafür vorgesehen, über die Maschinenaufhängung mit der Maschine bzw. den Maschinenteilen verbunden zu sein. Somit sind die Maschinen bzw. die Maschinenteile, welche durch die erfindungsgemäße Absturzsicherungsvorrichtung vor einem unkontrollierten Herunterfallen geschützt werden, ebenfalls an der Tragestruktur aufgehängt.

Erfindungsgemäß weist das Verbindungselement ein Dämpfungselement auf, der insbesondere als aktives Dämpfungselement oder kollabierendes Dämpfungselement ausgebildet ist. Bricht eine Aufhängung oder wird eine Aufhängung derart beschädigt, dass das damit aufgehängte Maschinenteil oder die damit aufgehängte Maschine oder die Last im Allgemeinen nicht mehr getragen werden kann, fällt die Maschine bzw. das Maschinenteil bzw. die Last herab. Der Sturz wird jedoch durch die erfindungsgemäße Absturzsicherungsvorrichtung aufgehalten, da über das Verbindungselement eine zusätzliche Verbindung zwischen Tragestruktur und Maschine bzw. Maschinenteil bzw. Last im Allgemeinen vorliegt. Durch das Vorsehen eines Dämpfungselementes wird dem System Energie entzogen und der dabei auftretende Fangstoß reduziert. Somit wird eine Beschädigung der Tragestruktur durch einen zu hohen Fangstoß verhindert. Gleichzeitig ist es bei der erfindungsgemäßen Absturzsicherungsvorrichtung nicht mehr erforderlich, eine Mindestfallgeschwindigkeit zu erreichen. Das Dämpfungselement wirkt unabhängig von der durch den Fall entstandenen kinetischen Energie sobald der Abstand zwischen Maschine bzw. Maschinenteil der Länge des Verbindungselements entspricht bzw. diese überschreitet. Die Mindestfallhöhe kann somit sehr klein gewählt werden oder entfallen.

Vorzugsweise entspricht die Länge des Verbindungselements im Wesentlichen dem maximalen Abstand zwischen Tragestruktur und Maschine bzw. Maschinenteil. Führt die Maschine bzw. ein Maschinenteil eine vertikale Bewegung aus bei der Ausführung seiner Aufgabe, entspricht der maximale Abstand zwischen Tragestruktur und Maschine bzw. Maschinenteil gerade der untersten Position, also in geringster Höhe. Somit ist gewährleistet, dass einerseits durch die Maschine alle erforderlichen Bewegungen während des Betriebs ausführbar sind. Andererseits ist sichergestellt, dass bei Versagen der Maschinenaufhängung keine hohen Fallhöhen entstehen. Somit kann die auftretende kinetische Energie beim Absturz des Maschinenteils bzw. der Maschine bzw. der Last im Allgemeinen gering gehalten werden. Die reduzierten Fallhöhe und das erfindungsgemäß vorgesehene Dämpfungselement, bewirken einen kleinstmöglichen Fangstoß, der auf die Tragestruktur übertragen wird.

Vorzugsweise ist die Länge des Verbindungselements weniger als 100 mm, bevorzugt weniger als 50 mm, besonders bevorzugt weniger als 20 mm länger als der maximale Abstand zwischen Tragestruktur und Maschine bzw. Maschinenteil. Somit wird gewährleistet, dass eine volle Beweglichkeit der Maschine in Betrieb gegeben ist. Gleichzeitig ist jedoch die Fallhöhe deutlich reduziert im Vergleich zu bekannten Fangsystemen, so dass auftretende Fangstöße reduziert werden können.

Vorzugsweise weist das Verbindungselement eine Kette oder ein Stahlseil oder ein andersartig teleskopierbares Element, z.B. teleskopierbare Stangen auf. Dabei ist das Verbindungselement insbesondere starr und weist lediglich eine geringe Elastizität auf. Dies wird erst möglich in Verbindung mit dem erfindungsgemäß vorgesehenen Dämpfungselement, da andernfalls sehr hohe Fangstöße an der Tragestruktur auftreten könnten bei einem Absturz einer Maschine oder eines Maschinenteils oder einer Last im Allgemeinen.

Vorzugsweise handelt es sich bei dem Dämpfungselement um einen Federdämpfer, eine hydraulische Bremse, einen Öldämpfer, einen Gasdruck-Federdämpfer, einen Luftdruck-Dämpfer oder ein kollabierbares Dämpfungselement. Besonders einfach und kostengünstig ist hier jedoch der Federdämpfer. Weiterhin bietet der Federdämpfer den Vorteil, auf einfache Weise an unterschiedliche Massen der Maschinen bzw. Maschinenteile bzw. Lasten angepasst zu werden, so dass stets eine optimale Dämpfung eines Absturzes erfolgen kann.

Vorzugsweise beträgt der maximale Hub des Dämpfungselements weniger als 150 mm, bevorzugt weniger als 100 mm, besonders bevorzugt weniger als 75 mm. Sobald also bei einem Absturz das Verbindungselement vollständig gestreckt ist und das Dämpfungselement betätigt wird zur Dämpfung, erfolgt somit nur noch eine geringfügige weitere Fallstrecke begründet durch den Arbeitshub des Dämpfungselements. Diese ist deutlich kleiner als die Mindestfallhöhe bekannter Fangsysteme und insbesondere durch die Wahl des Dämpfungselementes festgelegt. Somit ergibt sich eine vorherbestimmbare und bekannte maximale Fallhöhe der Maschine bzw. der Maschinenteile bzw. der Last im Allgemeinen bei einem Absturz aufgrund eines Bruchs oder einer Beschädigung der Aufhängung.

Vorzugsweise weist das Dämpfungselement ein Gegenspannelement auf, sodass das Dämpfungselement nicht unter der Gewichtskraft der Absturzsicherungsvorrichtung ausgelenkt wird. Somit steht stets der gesamte Betätigungsweg des Dämpfungselements zur Verfügung, zur Dämpfung eines Absturzes.

Somit wird aufgrund der vorliegenden Erfindung eine Absturzsicherungsvorrichtung zur Absturzsicherung von Maschinen, Teile von Maschinen bzw. allgemeinen Lasten geschaffen, die keine Mindestfallhöhe erfordert, um eine gewisse Auslösegeschwindigkeit zu erreichen. Vielmehr wird die erfindungsgemäße Absturzsicherungsvorrichtung bei jedem Absturz aktiv und dämpft den Absturz der Maschine bzw. des Maschinenteils bzw. der Last im Allgemeinen. Dabei ist die maximale Fallhöhe der Maschine bereits bei Auslegung der Absturzsicherungsvorrichtung bekannt. Somit ist eine zuverlässige Absturzsicherungsvorrichtung geschaffen, welche den unkontrollierten Absturz von Maschinen bzw. Maschinenteilen bzw. Lasten zuverlässig verhindert und nur einen geringen bzw. zulässigen Fangstoß an die Tragestruktur einleitet.

Nachfolgend wird die Erfindung anhand einer bevorzugten Ausführungsform unter Bezugnahme auf die beigefügten Zeichnungen näher erläutert.

Es zeigen:

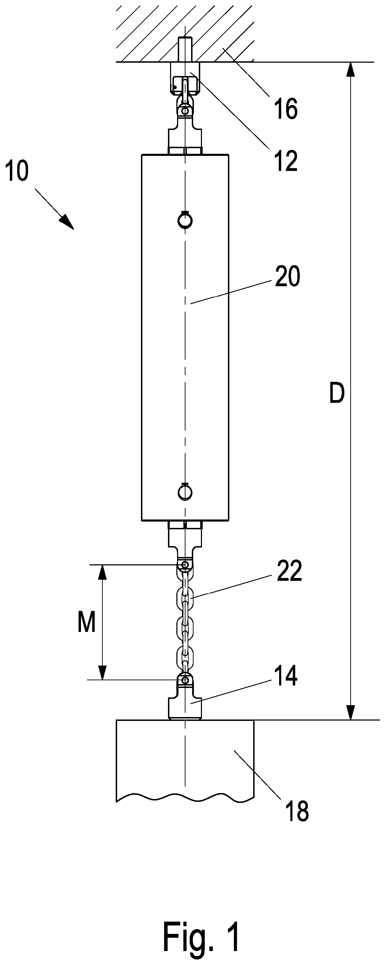

- Figur 1: eine erfindungsgemäße Absturzsicherungsvorrichtung in Seitenansicht und

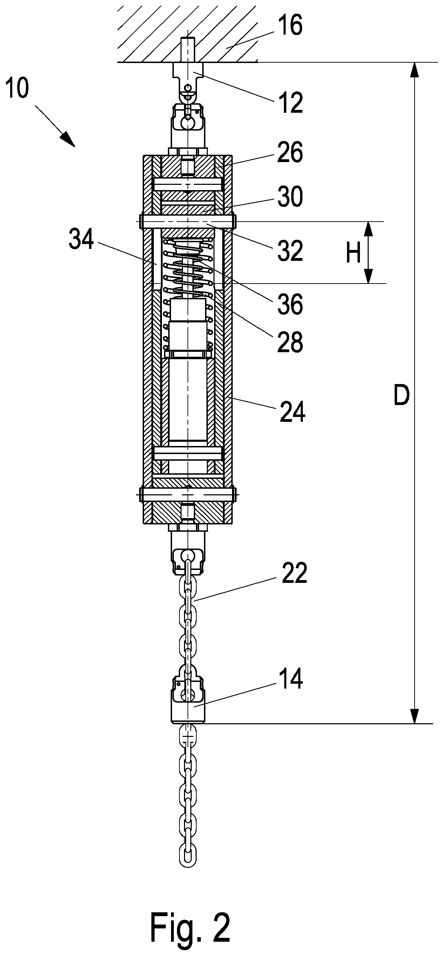

- Figur 2: die erfindungsgemäße Absturzsicherungsvorrichtung der Figur 1 in Schnittansicht.

Die erfindungsgemäße Absturzsicherungsvorrichtung weist ein Verbindungselement 10 auf. Dieses Verbindungselement 10 weist ein erstes Ende 12 und ein gegenüberliegend angeordnetes zweites Ende 14 auf. Das erste Ende 12 ist mit einer festen Tragestruktur 16, wie beispielsweise einem Stahlbau, einer Decke oder in einem Schienensystem beweglich und mitfahrend verbunden. Mit dem zweiten Ende 14 des Verbindungselements 10 ist eine Maschine 18 bzw. ein Maschinenteil bzw. eine Last im Allgemeinen verbunden.

Das Verbindungselement 10 weist weiterhin ein Dämpfungselement 20 auf. Bei diesem Dämpfungselement 20 kann es sich beispielsweise um eine hydraulische Bremse, ein Öldämpfer, einen Gasdruck-Federdämpfer, einen Luftdruck-Dämpfer oder ein kollabierbares, plastisch verformbares Dämpfungselement handeln. Weiterhin weist das Verbindungselement 10 eine Kette 22 auf. Dabei ist ein erstes Ende des Dämpfungselement 20 mit dem ersten Ende 12 des Verbindungselements verbunden und ein zweites Ende des Dämpfungselement 20 mit einem ersten Ende der Kette 22 verbunden. Ein zweites Ende der Kette 22 ist verbunden mit dem zweiten Ende 14 des Verbindungselements. Auch ist es möglich, zwischen dem ersten Ende 12 des Verbindungselements 10 und dem Dämpfungselement 20 ebenfalls eine Kette vorzusehen. Alternativ zur Kette 22 kann auch ein Stahlseil oder ein andersartiges teleskopierbares Element verwendet werden.

Das Verbindungselement weist dabei eine Länge D auf. Die Länge D entspricht dabei im Wesentlichen dem Abstand zwischen der Tragestruktur 16 und der Maschine 18 bzw. ist geringfügig, z.B. um etwa 20 mm länger gewählt, damit das Verbindungselement nicht gestreckt ist. Dabei wird der maximale Abstand zwischen Maschine 18 und Tragestruktur 16 zugrunde gelegt, also die unterste (Hub-)Position der Maschine 18, sofern die Maschine 18 vertikale Bewegungen ausführen kann. Somit ist die Länge D des Verbindungselements stets gleich oder geringfügig größer als jeder im Betrieb der Maschine auftretende Abstand zwischen Tragestruktur 16 und Maschine 18. Somit wird sichergestellt, dass die Absturzsicherungsvorrichtung keinen Einfluss hat auf die Bewegung der Maschine bzw. Last 18 während des normalen Betriebs. Erst bei Bruch oder Beschädigung einer Aufhängung, wenn aufgrund eines Absturzes sich der Abstand zwischen Maschine bzw. Last 18 und Tragestruktur 16 vergrößert, erfolgt eine Absturzsicherung der Maschine bzw. Last 18 durch die erfindungsgemäße Absturzsicherungsvorrichtung. Der auftretende Absturz wird durch die erfindungsgemäße Absturzsicherungsvorrichtung auf eine nur geringe Fallstrecke reduziert. Der dabei entstehende Fangstoß wird durch das Dämpfungselement 20 reduziert, so dass nur der zuvor kalkulierte und bestimmte Fangstoß an die Tragestruktur 16 übertragen wird. Gleichzeitig wird die Fallhöhe klein gehalten, so dass ein freier Fall lediglich auftritt über die Distanz D - A, wobei A der Abstand der Maschine bzw. Last 18 zur Tragestruktur 16 zum Zeitpunkt des Bruchs der Maschinenaufhängung bezeichnet. Ist beispielsweise die Maschine bzw. Last 18 zum Zeitpunkt des Bruchs der Aufhängung in der untersten möglichen (Hub-)Position, so erfolgt ein freier Fall der Maschine 18 lediglich über die zuvor gewählten 20 mm Dämpfungsweg, die das Verbdingungselement 10 länger gewählt wurde als der maximale Abstand zwischen Tragestruktur 16 und Maschine 18. Nach dem freien Fall tritt die Dämpfungswirkung des Dämpfungselementes 20 ein. Hierbei wird die durch den Fall entstandene kinetische Energie über das Dämpfungselement in Wärme umgewandelt und dem System entzogen. Der Arbeitshub H des Dämpfers beträgt dabei weniger als 150 mm und besonders bevorzugt weniger als 75 mm. Somit ergibt sich für das gewählte Beispiel eine maximale Fallhöhe ausgehend von der tiefsten Position der Maschine 18 von der Summe aus den gewählten 20 mm und dem maximalen Hub des Dämpfungselements 20. Somit wird eine sehr kleine Fallhöhe erreicht. Dies reduziert gleichzeitig den erzeugten Fangstoß. Da die Wirkung des Dämpfers in jedem Fall unabhängig von der entwickelten Geschwindigkeit funktioniert, ist eine Mindestfallgeschwindigkeit und damit auch eine Mindestfallhöhe nicht mehr erforderlich. Wird die Maschine bzw. Last 18 beispielsweise durch Medien Versorgungsleitungen z.B. Kabel oder Schläuche im Fall gebremst, unterstützt dies lediglich die Wirkung des Dämpfungselements 20 und führt nicht dazu, dass die Wirkung der Absturzsicherungsvorrichtung außer Kraft gesetzt wird, wie es in existierenden Fangsystemen der Fall ist.

Insbesondere wird die Länge M der Kette 22 so gewählt, dass eine ausreichende Bewegungsfreiheit für die Maschine 18 gegeben ist. Die Länge M ist somit stets größer als die maximale vertikale Beweglichkeit der Maschine 18, sodass verhindert wird, dass die Maschine 18 im bestimmungsgemäßen Betrieb das Dämpfungselement 20 betätigt.

Das als Federdämpfer ausgebildete Dämpfungselement 20 weist dabei einen äußeren Körper 24, z.B. ein zylindrisches Rohr auf sowie einen inneren Körper 26, wobei der innere Körper gegenüber dem äußeren Körper entgegen der Federkraft der Feder 28 verschoben werden kann. Dabei ist das erste Ende 12 des Verbindungselements 10 mit dem inneren Körper 26 verbunden, wohingegen die Kette 22 (alternativ Stahlseil oder teleskopierbares Element) und anschließend das zweite Ende 14 des Verbindungselements 10 mit dem äußeren Körper 24 verbunden ist. Die Feder 28 ist dabei innerhalb des inneren Körper 26 angeordnet und abgestützt gegen ein Anlageelement 30, welches über ein Verbindungselement, z.B. Stift 32 mit dem äußeren Körper 24 verbunden ist. Hierzu weist der innere Körper 26 insbesondere langlochförmige Ausnehmungen 34 auf, durch das das Verbindungselement (z.B. Stift) 32 vom äußeren Körper 24 an das Anlageelement 30 reichen kann. Die Ausnehmungen 34 weisen dabei eine Länge auf, die gerade dem Hub H des Dämpfers im Wesentlichen entsprechen. Weiterhin weist das Dämpfungselement 20 ein Gegenspannelement 36 auf, ebenfalls ausgebildet als Feder, das ein Auslenken des inneren Körper 26 gegenüber dem äußeren Körper 24 aufgrund der Gewichtskraft des äußeren Körper und der Kette 22 (alternativ Stahlseil oder teleskopierbares Element) gerade verhindert. Weiterhin ist die Feder 28 derart gewählt, dass sie eine Federkonstante aufweist die an das Gewicht der Absturzsicherungsvorrichtung angepasst ist. Hierbei handelt es sich lediglich um eine exemplarische Ausgestaltung des erfindungsgemäß vorgesehenen Dämpfungselements 20. Durch das Dämpfungselement 20 wird sichergestellt, dass eine ausreichende Dämpfung innerhalb des zur Verfügung stehenden Hubs H gewährleistet ist, so dass nur ein zulässiger Fangstoß in die Tragestruktur 16 eingeleitet wird.

## Patentansprüche

1. Absturzsicherungsvorrichtung zur Absturzsicherung von Maschinen, Maschinenteilen und allgemeinen Lasten mit
einem Verbindungselement, wobei das Verbindungselement ein erstes Ende aufweist zur Verbindung mit einer Tragestruktur und einem dem ersten Ende gegenüberliegendes zweites Ende zur Verbindung mit einer Maschine oder einem Maschinenteil oder einer Last,
**dadurch gekennzeichnet, dass**
das Verbindungselement ein Dämpfungselement aufweist.

2. Absturzsicherungsvorrichtung nach Anspruch 1, **dadurch gekennzeichnet, dass** die Länge des Verbindungselements dem maximalen Abstand zwischen Tragestruktur und Maschine bzw. Maschinenteil entspricht oder weniger als 100 mm, bevorzugt weniger als 50 mm und besonders bevorzugt weniger als 20 mm länger ist als der Abstand zwischen Tragestruktur und Maschine bzw. Maschinenteil.

3. Absturzsicherungsvorrichtung nach Anspruch 1 oder 2, **dadurch gekennzeichnet, dass** das Verbindungselement eine Kette und/oder ein Stahlseil und/oder ein teleskopierbares Element aufweist.

4. Absturzsicherungsvorrichtung nach einem der Ansprüche 1 bis 3, **dadurch gekennzeichnet, dass** es sich bei dem Dämpfungselement um einen Federdämpfer, eine hydraulische Bremse, einen Öldämpfer, eine Gasdruck-Federdämpfer, einen Luftdruck-Dämpfer oder ein kollabierendes Dämpfungselement handelt.

5. Absturzsicherungsvorrichtung nach einem der Ansprüche 1 bis 4, **dadurch gekennzeichnet, dass** der maximale Hub des Dämpfungselements weniger als 150 mm, bevorzugt weniger als 100 mm und besonders bevorzugt weniger als 75 mm beträgt.

6. Absturzsicherungsvorrichtung nach einem der Ansprüche 1 bis 5, **dadurch gekennzeichnet, dass** das Dämpfungselement ein Gegenspannelement aufweist, so dass das Dämpfungselement nicht unter der Gewichtskraft betätigt wird.

7. Absturzsicherungsvorrichtung nach einem der Ansprüche 1 bis 6, **dadurch gekennzeichnet, dass** das erste Ende zusammen mit einer beweglichen Tragestruktur verbunden ist, zur Mitbewegung der Absturzsicherungsvorrichtung mit der Maschine.

## Geänderte Patentansprüche

### Geänderte Patentansprüche gemäss Regel 137(2) EPÜ.

1. Absturzsicherungsvorrichtung zur Absturzsicherung von Maschinen, Maschinenteilen mit
einem Verbindungselement, wobei das Verbindungselement ein erstes Ende aufweist zur Verbindung mit einer Tragestruktur und einem dem ersten Ende gegenüberliegendes zweites Ende zur Verbindung mit einer Maschine oder einem Maschinenteil,
**dadurch gekennzeichnet, dass**
das Verbindungselement ein Dämpfungselement aufweist, wobei es sich bei dem Dämpfungselement um einen Federdämpfer, eine hydraulische Bremse, einen Öldämpfer, einen Gasdruck-Federdämpfer oder einen Luftdruck-Dämpfer handelt.

2. Absturzsicherungsvorrichtung nach Anspruch 1, **dadurch gekennzeichnet, dass** die Länge des Verbindungselements dem maximalen Abstand zwischen Tragestruktur und unterer Hublage der Maschine bzw. Maschinenteil entspricht oder weniger als 100 mm, bevorzugt weniger als 50 mm und besonders bevorzugt weniger als 20 mm länger ist als der Abstand zwischen Tragestruktur und der unteren Hublage der Maschine bzw. Maschinenteil.

3. Absturzsicherungsvorrichtung nach Anspruch 1 oder 2, **dadurch gekennzeichnet, dass** das Verbindungselement eine Kette und/oder ein Stahlseil und/oder ein teleskopierbares Element aufweist.

4. Absturzsicherungsvorrichtung nach einem der Ansprüche 1 bis 3, **dadurch gekennzeichnet, dass** der maximale Hub des Dämpfungselements weniger als 150 mm, bevorzugt weniger als 100 mm und besonders bevorzugt weniger als 75 mm beträgt.

5. Absturzsicherungsvorrichtung nach einem der Ansprüche 1 bis 4, **dadurch gekennzeichnet, dass** das Dämpfungselement ein Gegenspannelement aufweist, so dass das Dämpfungselement nicht unter der Gewichtskraft der Absturzsicherungsvorrichtung ausgelenkt wird.

6. Absturzsicherungsvorrichtung nach einem der Ansprüche 1 bis 5, **dadurch gekennzeichnet, dass** das erste Ende mit einer Tragestruktur bewegbar verbunden ist, zur Mitbewegung der Absturzsicherungsvorrichtung mit der Maschine.
